# EUROPÄISCHE PATENTSCHRIFT

(11) **EP 0 872 308 B1**
(45) Veröffentlichungstag und Bekanntmachung des Hinweises auf die Patenterteilung: **15.10.2003**
(21) Anmeldenummer: 98107144.2
(22) Anmeldetag: 20.04.1998
(51) Int. Cl.: B24B 23/04, B24B 23/02

(54) **Maschinelles Schleif-, Raspel- oder Poliergerät**
Mechanised tool for grinding, rasping, or polishing
Outil mécanisé pour meuler, râper, ou polir

(30) Priorität: 18.04.1997 DE 29707040 U
(43) Veröffentlichungstag der Anmeldung: 21.10.1998
(73) Patentinhaber: Buchter, Gerd, 65183 Wiesbaden (DE); Kimbel, Erich, 65183 Wiesbaden (DE); Taylor, Jill, 65183 Wiesbaden (DE)
(72) Erfinder: Buchter, Gerd, 65183 Wiesbaden (DE); Kimbel, Erich, 65183 Wiesbaden (DE); Taylor, Jill, 65183 Wiesbaden (DE)
(74) Vertreter: Blumbach, Kramer & Partner GbR

(56) Entgegenhaltungen:
- EP-A- 0 190 775
- EP-A- 0 730 931
- CH-A- 666 648
- US-A- 3 359 809
- US-A- 5 022 190

## Beschreibung

Die Erfindung bezieht sich auf ein mit Hand zu führendes maschinelles Schleif-, Raspel- oder Poliergerät mit den. Merkmalen des Oberbegriffs des Anspruchs 1.

Bei einem bekannten Gerät dieser Art (EP 0 730 931 A1) ist eine von der Abtriebswelle aus antreibbare Zwischenwelle vorgesehen, die mit einer geringeren Drehzahl als die Abtriebswelle rotiert und eine Schrägscheibe antreibt, die ihrerseits mit einem Folgeelement in Eingriff steht, das auf einer Verlängerung der Abtriebswelle sitzt. Auf diese Weise wird das Folgeelement von der Schrägscheibe und damit auch die Abtriebswelle oszillierend angetrieben. Der Oszillationsantrieb kann dadurch unterbrochen werden, daß das auf der Verlängerung der Abtriebswelle sitzende Zahnrad zum Antrieb der Zwischenwelle außer Eingriff mit diesem gebracht wird. Um die Abtriebswelle anzutreiben, ist ferner eine Kegelradpaarung vorgesehen, wobei das abgetriebene Kegelrad und die Abtriebswelle Kupplungsausbildungen in Form einer Keilverzahnung aufweisen, um einerseits das Drehmoment zu übertragen und andererseits die oszillierende Bewegung der Abtriebswelle zu ermöglichen.

Der Erfindung liegt die Aufgabe zugrunde, eine weitere Antriebsanordnung anzugeben, die eine oszillierende Bewegung der Abtriebswelle ermöglicht. Die gestellte Aufgabe wird aufgrund der Merkmale des Anspruchs 1 bzw. 12 gelöst und durch die weiteren Merkmale der abhängigen Ansprüche ausgestattet und weiterentwickelt.

Hinsichtlich der angewendeten Mittel ist das neue Gerät gegenüber dem vorbekannten Gerät noch vereinfacht. Neben der Möglichkeit, den Motor parallel zur Stütz- und Führungseinrichtung anzuordnen, wird auch die Möglichkeit eröffnet, den Motor senkrecht zu dieser Stütz- und Führungseinrichtung anzuordnen. In diesem Fall wird die Abtriebswelle in axialer Richtung der Motorwelle verschiebbar gelagert, d. h. Abtriebswelle und Motorwelle fluchten zueinander oder sind parallel zueinander angeordnet. Wenn der Motor parallel zur Stütz-und Führungseinrichtung angeordnet werden soll, wird eine unmittelbar von der Motorwelle antreibbare Welle angewendet, die vorzugsweise als Zahnwelle ausgebildet ist und zu der die Abtriebswelle verschieblich gelagert ist.

Im einzelnen treibt die Zahnwelle einerseits die Oszillationseinrichtung und andererseits ein Abtriebszahnrad an, welches die Abtriebswelle antreibt. Das Abtriebszahnrad ist axial zu der Zahnwelle verschieblich geführt und bleibt mit dieser in Eingriff, wenn die Oszillationseinrichtung die Hin- und Herbewegung des Abtriebszahnrades veranlaßt.

Bei einer ersten Ausführungsform wird das Untersetzungsverhältnis zwischen Zahnwelle und einer zur Oszillationseinrichtung gehörigen Zwischenwelle nur wenig unterschiedlich zu dem Untersetzungsverhältnis zwischen der Zahnwelle und der Abtriebswelle gewählt. So können mit einfachen Mitteln langsame Oszillationsbewegungen gegenüber den raschen Drehbewegungen des Werkzeugs erzeugt werden, wie es für die günstige Handhabung des Geräts erwünscht ist.

Bei einer weiteren Ausführungsform wird die Zwischenwelle im gewünschten Untersetzungsverhältnis der Oszillationsbewegung des Werkzeugs gegenüber der Rotation von der Motorwelle über ein Zahnradpaar angetrieben, dessen kleineres Zahnrad auf der Motorwelle sitzt bzw. integral mit dieser verbunden ist. Das größere Zahnrad kann ein Schiebezahnrad sein, um die Oszillationsbewegung einund ausschalten zu können.

Bei einer weiteren höchst vorteilhaften Ausführungsform sind die Abtriebswelle und die Zwischenwelle koaxial zueinander angeordnet, wodurch eine verbesserte Lagerung der Abtriebswelle und somit eine wesentlich erhöhte Abstützwirkung gegenüber auftretenden Querkräften gewährleistbar isc. Zweckmäßiger Weise ist hierbei die Zwischenwelle als eine die Abtriebswelle teilweise umgebende Hohlwelle ausgebildet, wodurch die axiale Verschiebbarkeit der Abtriebswelle sowie deren Leistungsfähigkeit hinsichtlich der Übertragung des Arbeitsdrehmoments auf das Werkzeug sichergestellt ist.

In weiterer bevorzugter Ausgestaltung ist vorgesehen, das erfindungsgemäße Gerät mit einer Einrichtung zum Zuführen von flüssigem Medium an das Werkzeug auszubilden, um sowohl das Naßbearbeiten von Werstücken zu ermöglichen als auch gegebenenfalls die Kühlung des Werkzeugs zu gewährleisten.

Wird die Abtriebswelle in Bezug auf die Gerätelängsachse seitlich zu dieser verschwenkt angordnet, kann das Gerät insbesondere bei der Bearbeitung von Flächen, die sich unter Bildung von Kanten schneiden besonders vorteilhaft eingesetzt werden. Die Stütz- und Führungseinrichtung kann der Kante an der angrenzenden Fläche geführt werden, was die Gefahr des unerwünschten Verkippens des Geräts weitgehend reduziert.

Die Erfindung wird anhand der Zeichnungen beschrieben. Dabei zeigt:
- Fig. 1: eine erste Ausführungsform als Schleifgerät, von der Seite gesehen, teilweise geschnitten,
- Fig. 2: eine zweite Ausführungsform des Schleifgeräts, von der Seite gesehen und teilweise geschnitten,
- Fig. 3: eine dritte Ausführungsform des Schleifgerätes, teilweise geschnitten und weggebrochen,
- Fig. 4: einen Schnitt durch eine Einzelheit in Fig. 3,
- Fig. 5: eine vierte Ausführungsform des Schleifgerätes, teilweise geschnitten und weggebrochen, und
- Fig. 6: eine schematische Aufsicht einer fünften Ausführungsform des Schleifgerätes, teilweise geschnitten und weggebrochen.

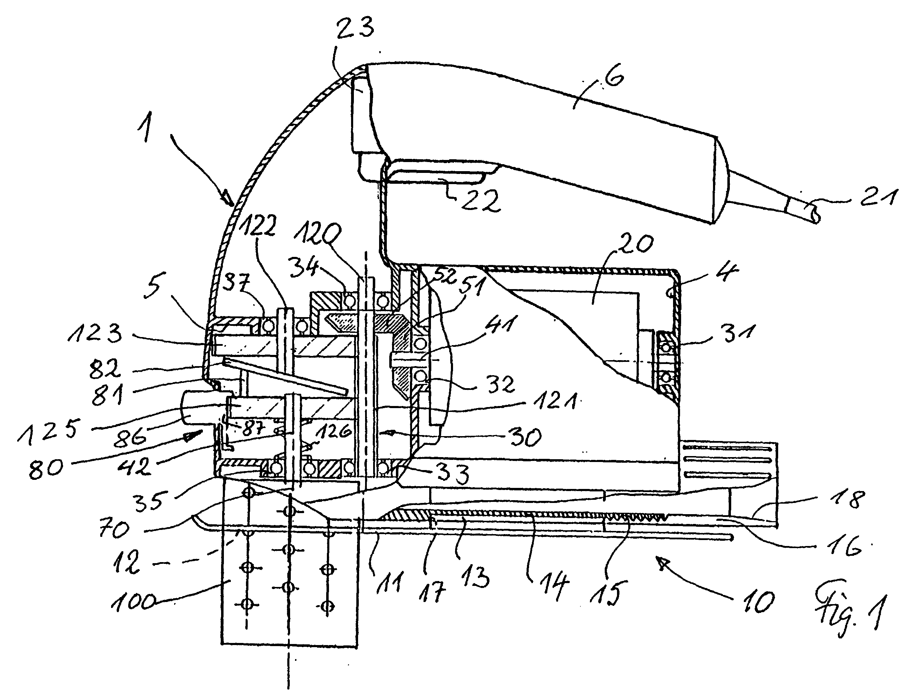

Es wird Bezug auf Fig. 1 genommen. Ein Gehäuse 1 umschließt Hohlräume 4, 5 zur Aufnahme eines Elektromotors 20 und eines Antriebsmechanismus 30 und weist einen Handgriff 6 auf. Das Gerät besitzt eine Stütz- und Führungseinrichtung 10, die eine Gleitkufenplatte 11 umfaßt, damit das Gerät entlang eines zu bearbeitenden Werkstücks geführt werden kann. Die Gleitkufenplatte 11 weist eine Aussparung 12 auf, durch die ein Werkzeug 100 hindurchtritt, ,das zum Raspeln, Schleifen oder Polieren geeignet sein kann und über einen nicht näher dargestellten Werkzeughalter 70 mit dem Ende der Abtriebswelle 42 verbunden ist. Die Gleitkufenplatte 11 ist an einer Buchse 13 befestigt, die an einem Rohr 14 gelagert ist. Das vordere Ende 17 des Rohrs 14 ist etwas dicker ausgeführt und mit diesem Ende nahe des Werkzeugs 100 am Gehäuse 1 befestigt. Das rückwärtige Ende des Rohres 14 weist ein Gewinde 15 auf, auf dem ein hohler Drehknopf 16 aufgeschraubt ist. Das vordere verdickte Ende 17 des Rohrs 14 bildet eine Schulter, an der die Buchse 13 anliegt und durch Anziehen des Drehknopfes 16 in gewünschter Winkellage festgelegt werden kann. Der Drehknopf 16 weist Konusflächen 18 auf, um einen Absaugschlauch durch Klemmen anschließen zu können. Auf diese Weise können Späne und Staub aus dem Bereich des Werkzeugs 100 über das Rohrinnere abgesaugt werden.

Ein elektrisches Kabel 21 ist in den Handgriff 6 hineingeführt, an dem ein Motorschalter 22 angebracht ist. Dieser ist über nicht gezeigte Leitungen und sicherungseinrichtungen 23 mit dem Elektromotor 20 verbunden.

Der Elektromotor 20 weist eine Antriebswelle 41 auf, die in Lagern 31 und 32 gelagert ist und ein Kegelzahnrad 51 antreibt, das mit einem weiteren Kegelzahnrad 52 kämmt. Das Kegelrad 52 ist mit einer Zahnwelle 120 drehfest verbunden, die eine längs verlaufende Verzahnung 121 aufweist und in Lagern 33, 34 im Gehäuse 1 gelagert ist. Eine Zwischenwelle 122 ist in Lagern 37 im Gehäuse 1 gelagert und trägt ein Zwischenzahnrad 123, das mit der Verzahnung 121 der Zahnwelle 120 kämmt. An der Zwischenwelle 122 ist ferner eine Schrägscheibe 82 befestigt, die mit einem Folgeelement 81 zusammenarbeitet, das an einem Abtriebszahnrad 125 befestigt ist. Das Abtriebszahnrad 125 ist drehfest mit einer Abtriebswelle 42 verbunden, die in einem Lager 35 des Gehäuses so gelagert ist, daß eine axiale Verschiebung der Abtriebswelle 42 gegenüber dem Lager 35 möglich ist, die Welle 42 aber gegenüber Querkräften gut abgestützt wird. Eine Feder 126 drängt das Zahnrad 125 in Richtung auf die Schrägscheibe 82, um das Folgeelement 81 in Anlage an der Schrägscheibe 82 zu halten.

Wie ersichtlich, laufen die Achsen der Wellen 120, 122 und 42 parallel zueinander, wobei der Achsabstand zwischen den Wellen 122 und 42 gering ist. Auf diese Weise wird ein Untersetzungsverhältnis zwischen der Welle 120 und der Welle 122 erzielt, das nur geringfügig größer ist als das Untersetzungsverhältnis zwischen den Wellen 120 und 42. Mit anderen Worten, das Zahnrad 125 und mit ihm das Folgeelement 81 drehen sich nur wenig schneller als das Zahnrad 123 und die Schrägscheibe 82. Infolge der Relativdrehung des Folgeelements 81 entlang des Umfangs der Schrägscheibe 82 kommt es zu einer axialen Verschiebung der Abtriebswelle 42 gegenüber dem Gehäuse 1 und damit zu einer axialen Verschiebung des Werkzeugs 100 gegenüber der Gleitkufenplatte 11. Die Übersetzungsverhältnisse sind derart gewählt, daß etwa 30 Umdrehungen des Werkzeugs 100 erfolgen, bevor eine komplette Hin- und Herbewegung des Werkzeugs 100 erzielt wird.

Die Anordnung der Schrägscheibe 82 und des Folgeelements 81 zueinander bilden somit eine Oszillationseinrichtung 80 für die Abtriebswelle 42. Dieser Oszillationseinrichtung kann ein Gleitschalter 86 mit Gabeleinrichtung 87 zugeordnet sein, um das Zahnrad 125 zu verschieben und damit den Nockenfolger 81 außer Eingriff von der Schrägscheibe 82 zu bringen. In diesem Fall wird die Oszillationsbewegung der Abtriebswelle 42 ausgeschaltet.

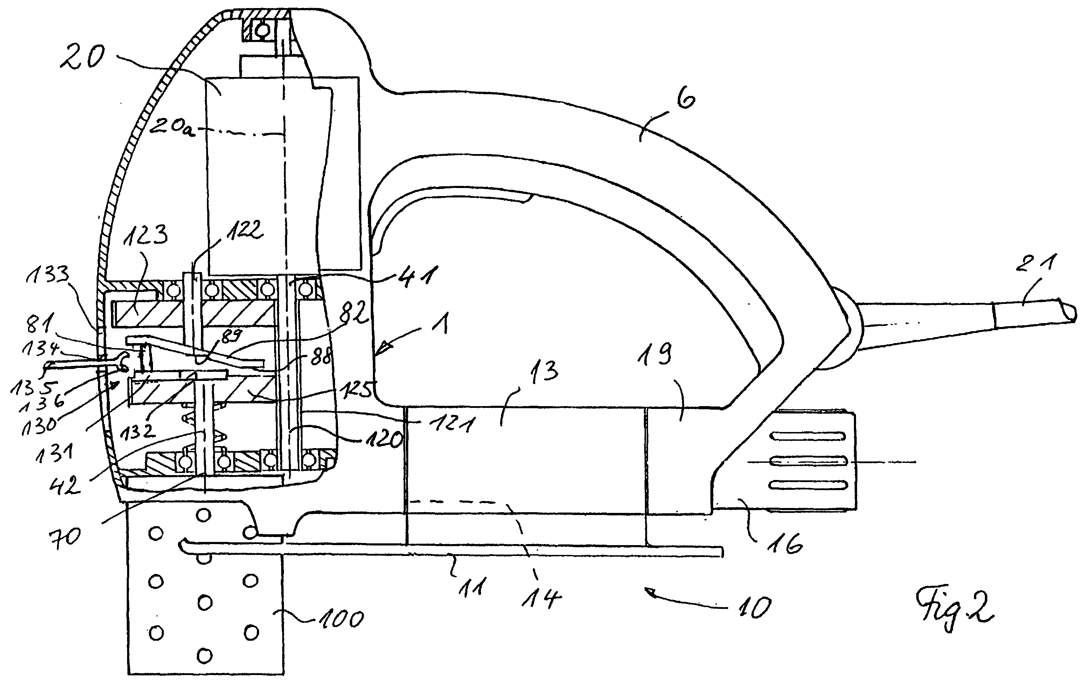

Fig. 2 zeigt eine weitere Ausführungsform des Schleif-, Raspel- oder Poliergeräts. Zur ersten Ausführungsform entsprechende Elemente sind mit dem gleichen Bezugszeichen belegt. Die Unterschiede betreffen die Ausrichtung des Motors 20, dessen Achse 20a vertikal ausgerichtet ist. In dem Ausführungsbeispiel fallen ferner die Achsen der Zahnwelle 120 und der Motorwelle 41 zusammen, d. h. Motorwelle 41 und Zahnwelle 120 können das gleiche Teil sein.

Der Griff 6 weist einen Halterungsfortsatz 19 für die Stütz- und Führungseinrichtung 10 auf. Die Buchse 13 ist in den Raum zwischen Gehäuse 1 und Halterungsfortsatz 19 gefügt und wird mittels des Rohres 14 gelagert, wie im Beispiel der Fig. 1. Der Drehknopf 16 dient zur Festklemmung der Buchse 13 und damit der Festlegung der Winkelstellung der Gleitkufenplatte 11.

Die Oszillationseinrichtung kann wie im Beispiel der Fig. 1 ausgebildet sein, es kann aber auch die gezeichnete Variante angewendet werden. Deren Schrägscheibe 82 ist für bevorzugte Bahnen des Folgeelements 81 gestaltet und weist zu diesem Zweck eine Laufbahn 88 am äußeren Rand und eine Laufbahn 89 im zentralen Bereich der Schrägscheibe auf. Es ist eine Oszillationseinstelleinrichtung 130 vorgesehen, die darauf beruht, daß beim Eingriff des Folgeelements 81 in die Laufbahn 89 keine Oszillationen von der Schrägscheibe 82 auf das Abtriebszahnrad 125 übermittelt werden. Zu diesem Zweck sitzt das stiftförmige Folgelement 81 auf einem Schlitten 131, der in einer Nut 132 des Abtriebszahnrades 125 geführt ist. Das Gehäuse 1 besitzt ein Sichtfenster 133, in dem eine Öffnung 134 angebracht ist, in welcher ein Manipulator 135 sitzt. Der Manipulator 135 weist ein (in der Zeichnung um 90 gedreht gezeichnetes) Gabelende 136 auf, das zum Greifen und Loslassen des Folgeelements 81 ausgebildet ist. Bei abgeschaltetem Gerät kann man das Folgeelement 81 so verschieben, daß es entweder in der Umlaufbahn 88 oder in dem Bereich 89 eingreift. Beim Eingriff in die Randlaufbahn 88 erfolgt die Oszillationsbewegung des Abtriebszahnrades 125 und damit auch der Abtriebswelle 42 und des Werkzeugs 100, während beim Eingriff des Folgeelements 81 in den Bereich 89 keine derartige Oszillationsbewegung stattfindet. Das Ausschalten der Oszillationsbewegung ist dann wichtig, wenn man mit der radialen Unterseite des Werkzeugs 100 arbeiten will.

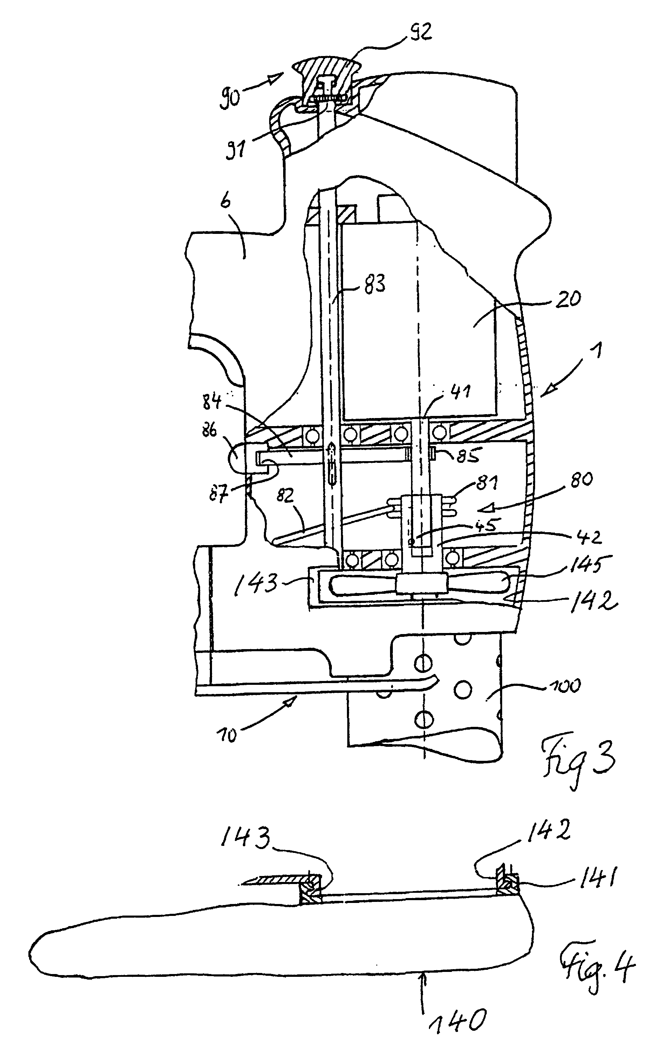

Fig. 3 zeigt eine weitere Ausführungsform der Erfindung, wobei mit den vorhergehenden Ausführungsformen übereinstimmende Teile mit den gleichen Bezugszeichen belegt ,werden. Der Aufbau des Gehäuses 1 mit der Anordnung des Elektromotors 20 entspricht der Ausführungsform nach Fig. 2. Auch die Ausbildung des Griffs 6 mit Halterungsfortsatz für die Stütz- und Führungseinrichtung 10 entspricht der Ausführung nach Fig. 2 und ist deshalb weggebrochen worden. Der Hauptunterschied besteht in der Ausbildung der Oszillationseinrichtung 80 mit Nockenfolger 81 als Nutring und Schrägscheibe oder Taumelscheibe 82.

Die Motorwelle 41 und die Abtriebswelle 42 fluchten zueinander, wobei die Abtriebswelle 42 wenigstens teilweise hohl ausgebildet ist, um das vordere Ende der Motorwelle 41 aufzunehmen. Im Überlappungsbereich der beiden Wellen 41 und 42 sind diese im Sinne einer Kupplung 45 ausgebildet, über die das Drehmoment vom Motor 20 zum Werkzeug 100 übertragen werden kann, während gleichzeitig eine gewisse Längsverschiebung ermöglicht wird, wie diese durch die Oszillationseinrichtung 80 bewirkt wird.

Die Oszillationseinrichtung 80 umfaßt neben den bereits erwähnten Teilen 81 und 82 noch eine Zwischenwelle 83 sowie Zahnräder 84 und 85. Das Zahnrad 85 kann integral mit der Motorwelle 41 verbunden sein. Das Zahnrad 84 ist als Schiebezahnrad ausgebildet und beispielsweise über einen Federkeil mit der Zwischenwelle 83 verbunden, um diese anzutreiben. Das Schiebezahnrad 84 kann mittels eines Gleitschalters 86, der eine Gabeleinrichtung 87 besitzt, in und außer Eingriff mit dem Zahnrad 85 gebracht werden. Auf diese Weise kann man die Oszillationseinrichtung 80 ausschalten, indem der Antrieb der Zwischenwelle 83 ausgeschaltet wird.

Am oberen Ende der Zwishenwelle 83 ist eine Einstellvorrichtung 90 vorgesehen, mit welcher die Höhenlage des Werkzeugs 100 gegenüber der Stütz- und Führungseinrichtung 10 eingestellt werden kann. Die Einstellvorrichtung 90 umfaßt eine Rändelscheibe 91, die am Ende der Zwischenwelle 83 angebracht ist, und einen Drehknopf 92, der die Rändelscheibe lose umgibt, jedoch durch Drücken an einem Umfangsteil mit der Rändelscheibe 91 gekoppelt werden kann. Die Einstellvorrichtung 90 wird bei ausgerücktem Schiebezahnrad 84 angewendet, und zwar wird durch die Ankopplung des Drehknopfes 92 an die Rändelscheibe 91 die Möglichkeit der Drehung der Zwischenwelle 83 von Hand eröffnet, bei welcher die Schrägscheibe 82 gedreht und demgemäß die Stellung des Folgeelements 81 nach oben oder unten verstellt wird. Mit der Verstellung des Folgeelements 81 wird auch die Stellung des Werkzeugs 100 relativ zu der Stütz- und Führungseinrichtung 10 verändert. Bei dieser Benutzungsart stellt die Stütz- und Führungseinrichtung 10 einen Tiefenanschlag für das Werkzeug 100 dar.

Wenn das Werkzeug 100 oszillierend angetrieben werden soll, wird das Schiebezahnrad 84 zum Eingriff mit dem Zahnrad 85 verschoben und der Motor 20 angeschaltet. Über die Zahnräder 85 und 84 erfolgt ein Antrieb der Zwischenwelle 83, die wiederum die Schrägscheibe 82 antreibt, deren Rand eine Taumelbewegung ausführt. Der Rand greift in eine Nut des Folgeelements 81 ein und wird somit mit diesem gekoppelt. Dadurch macht das Folgeelement 81 die Taumelbewegungen der Schrägscheibe 82 mit und wird nach oben und unten bewegt, während gleichzeitig die Drehbewegung infolge der Kupplung 45 zur Motorwelle 41 gegeben ist.

Das Übersetzungsverhältnis der Zahnräder 85 zu 84 bestimmt die Anzahl der Drehbewegungen zu einer Oszillationsbewegung. Ein Untersetzungsverhältnis zwischen den Zahnrädern 85 und 84 von 1:10 bis 1:30 wird bevorzugt.

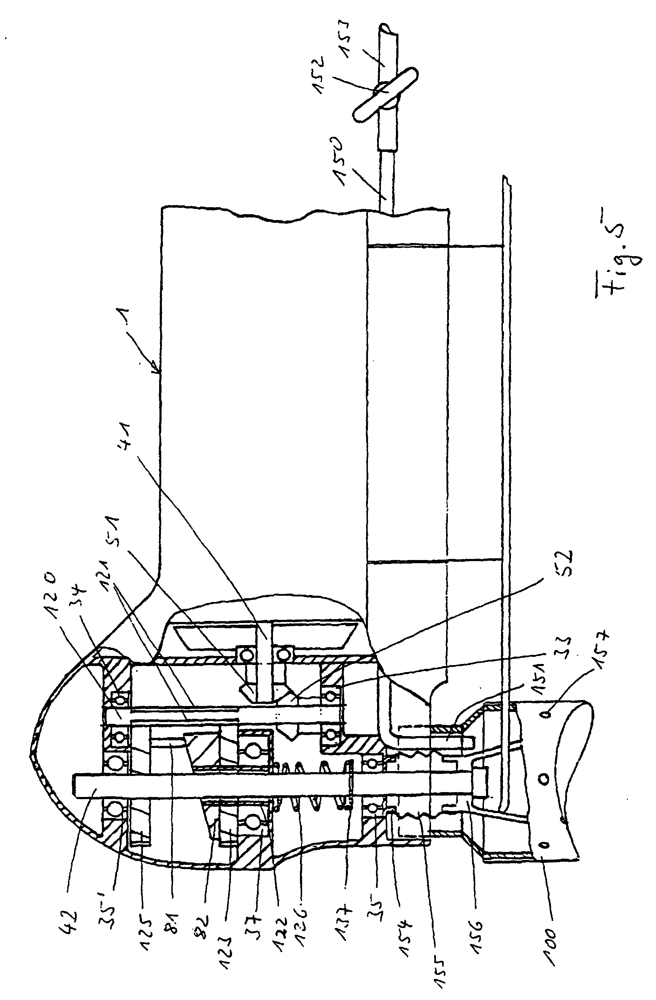

Zusätzlich oder alternativ zu der Absaugmöglichkeit von Schleifstaub durch das Rohr 14 und den hohlen Drehknopf 16 kann auch der Schleifstaub in einem Staubbeutel 140 (Fig. 4) gesammelt werden, der einen Kupplungsrand 141 aufweist. Am Gehäuse 1 ist eine seitliche Öffnung 142 vorgesehen, die von einem Kupplungsrand 143 umgeben wird, auf welche der Kupplungsrand 141 paßt. An der Abtriebswelle 42 ist ein Lüfter 145 angebracht, der den am Werkzeug 100 entstehenden Schleifstaub ansaugt und durch die Öffnung 142 in den Staubbeutel 140 hineinfördert.

Das Gerät kann mannigfaltig abgewandelt werden, ohne aus dem Schutzumfang der Ansprüche herauszuführen. So kann' die Schrägscheibe oder Taumelscheibe 82 eine Ausbildung aufweisen, die ein Lager an der Zwischenwelle 83 umfaßt, von der aus ein Arm zu dem Nockenfolger 81 führt, um diesen oszillierend hin und her anzutreiben.

In einer vereinfachten Ausführungsform der Maschine kann der Griff 6 mit dem Maschinengehäuse 1 kombiniert sein, d. h. das Maschinengehäuse ist gleichzeitig als Griff ausgebildet.

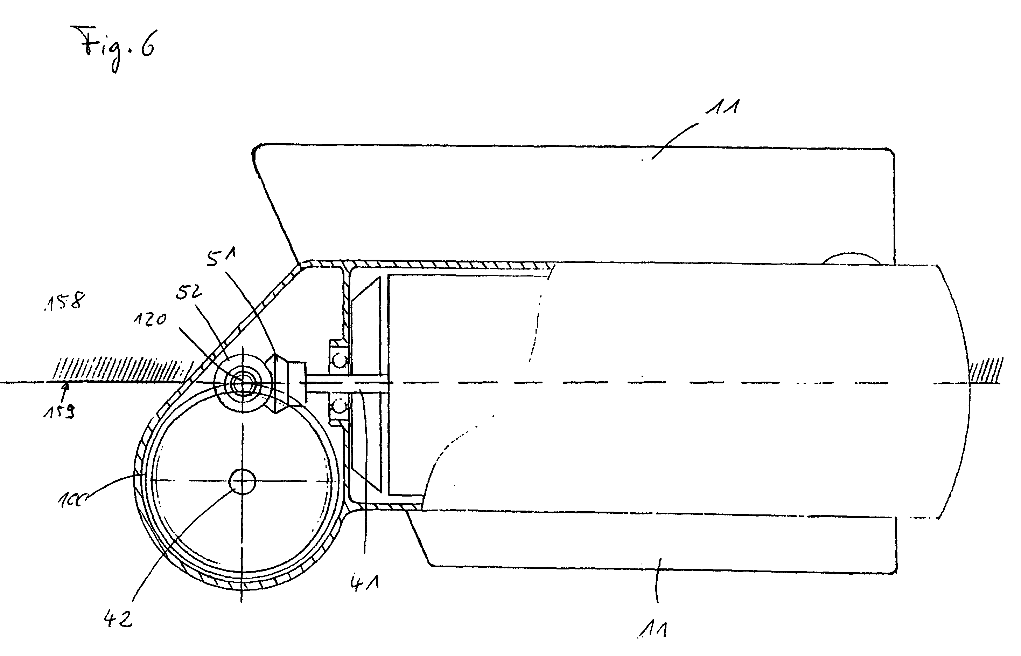

Eine derartige Kombination von Griff und Maschinengehäuse 1 ist beispielsweise gemäß Fig. 5 an einer weiteren sehr vorteilhaften Ausführungsform der Erfindung ausgebildet. Es sei darauf hingewiesen, daß zu der ersten Ausführungsform enstsprechende Elemente wiederum mit gleichen Bezugszeichen belegt sind. Dem Ausführungsbeispiel der Fig. 1 vergleichbar, erfolgt mittels der Motorwelle 41 der Antrieb der Zahnwelle 120 über die Kegelräder 51 und 52.

In Abwandlung sind die Kegelräder 51 und 52 jedoch bei der Ausführungsform der Fig. 5 am unteren Endbereich der Zahnwelle angeordnet, wodurch der Schwerpunkt der erfindungsgemäßen Maschine insgesamt näher in Richtung zum Werkzeug 100 verlagert werden kann. Infolge einer solchen Schwerpunktverlagerung wird für den Benutzer insbesondere ein genaues, gleichmäßiges und ruhiges Führen der Maschine während der Bearbeitung eines Werkstücks wesentlich erleichert.

Ferner ist die Abtriebswelle 42 der Ausführungsform gemäß Fig. 5 in zwei Lagern 35 und 35' gelagert, wodurch die Abstützung der Abtriebswelle 42 gegenüber Querkräften wesentlich verbessert ist. Um eine derartige Lagerung der Abtriebswelle 42 zu gewährleisten, ist die Zwischenwelle 122, die in den Lagern 37 gelagert ist und das Zwischenzahnrad 123 trägt, als Hohlwelle ausgebildet, durch welche die Abtriebswelle 42 hindurchführt. Die axiale Verschiebung der Abtriebswelle 42 sowie des mit dieser drehfest verbundenen und mit der Verzahnung 121 der Zahnwelle 120 kämmenden Abtriebszahnrades 125 gegenüber den Lagern 35 und 35' ist somit weiterhin gewährleistet.

Die bei der Ausführungsform der Fig. 5 verwendete Schrägscheibe 82 ist am oberen Bereich der hohlen Zwischenwelle 122 befestigt und arbeitet in zum Ausführungsbeispiel der Fig. 1 entsprechender Weise mit dem am Abtriebszahnrad 125 befestigten Folgeelement 81 zusammen.

Die Feder 126, welche das Abtriebszahnrad 125 in Richtung auf die Schrägscheibe 82 drängt, ist an einem Ende zum Lager 37 hin abgestützt und am entgegengesetzten Ende mit der Abtriebswelle 42 verbunden. Beim dargestellten Ausführungsbeispiel befindet sich hierfür das untere Ende der Feder 126 in Anlage zu einem Sprengring 137, der in eine an der Abtriebswelle 42 ausgebildete Nut eingreift.

Es sei darauf hingewiesen, daß die bei Fig. 5 gewählte Anordnung der Feder 126 sowie die im Vergleich zum Ausführungsbeispiel der Fig. 1 vertauschte Anordnung des Zwischenzahnrades 123 und des Abtriebszahnrades 125 nicht zwingend sind und andere Möglichkeiten der Anordnungen, bei Verwendung einer Hohlwelle als Zwischenwelle 123 und einer in Lagern 35 und 35' zweifach gelagerten Abtriebswelle 42, innerhalb des Wissens eines Fachmanns liegen. Beispielhaft sei die mögliche Anordnung einer Feder 126 zwischen dem Lager 35' und dem Abtriebszahnrad 125 erwähnt.

Ferner wird aufgrund der bei dem Ausführungsbeispiel der Fig. 5 koaxial angeordneten Abtriebswelle 42 und Zwischenwelle 122 die Anzahl der Drehbewegungen des Werkzeuges 100 zu einer Oszillationsbewegung durch die Anzahl der Zähne des jeweiligen Zahnkranzes des Abtriebszahnrades 125 und des Zwischenzahnrades 123 bestimmt. In der Praxis hat sich hierbei eine Differenz von ungefähr 1 bis 3 Zähnen bei einem Zahnkranz des Abtriebszahnrades 125 mit circa 50 Zähnen als zweckmäßig erwiesen.

Als weiteres zusätzliches Merkmal weist die bei Fig. 5 dargestellte Ausführungsform eine Einrichtung zum Zuführen von Wasser oder eines flüssigen Fluids auf, mit welcher die erfindungsgemäße Maschine zusätzlich insbesondere zum Naßschleifen oder -polieren einer zu bearbeitenden Werkstückoberfläche einsetzbar ist.

Hierzu ist eine Zufuhrleitung 150 praktischerweise derart angeordnet, daß ein Auslaßende 151, wie dargestellt, wenigstens teilweise in das Werkzeug 100 reicht. Die Zufuhrleitung 150 wird zur Inbetriebnahme an einen ein Ventil 152 umfassenden Schlauch 153 angeschlossen, der z.B. mit einer Wasserquelle verbunden ist, wobei das Ventil 152 zur Regulierung der gewünschten Durchflußmenge dient.

Um den Antriebsmechanismus vor eindringender Flüssigkeit zu schützen, weist die Maschine eine Kranz 154 auf, an dem ein Faltenbalg 155 befestigt ist. Der Faltenbalg 155 ist an seinem unteren Ende zweckmäßigerweise mit einer Lippendichtung ausgebildet, die mit der Nabe 156 des Werkzeughalters flüssigkeitsabdichtend verbunden ist.

Das auf das Werkzeug 100 aufgebrachte Schleifmedium weist ferner eine Anzahl von Durchgangsöffnungen 157 auf, durch welche das in das Werkzeuginnere geführte Medium nach außen dringen kann.

Es sei erwähnt, daß über die Zufuhrleitung 150 ferner ein geeignetes Kühlmedium zum Kühlen des Werkzeuges 100 diesem zugeführt werden kann. Darüberhinaus ist es beispielsweise möglich, das Auslaßende 151 derart anzuordnen, daß es durch eine nicht dargestellte Öffnung des Gehäuses nach außen reicht, um so das zugeführte Medium direkt auf die äußere Werkzeugoberfläche zu leiten.

Fig. 6 ist die skizzenhafte Darstellung einer Aufsicht einer weiteren Ausführungsform der Erfindung, bei welcher der den Antriebsmechanismus aufnehmende Gehäuseteil derart abgewinkelt ausgebildet ist, daß die Abtriebswelle 42 in Bezug auf die gestrichelt dargestellte Gerätelängsachse seitlich zu dieser verschwenkt angordnet ist. Hierdurch nimmt die gemäß Fig. 6 mit der oberen Gleitkufenplatte auf einer Tischoberfläche 158 aufliegende und mit dem Werkzeug 100 an der Tischkante 159 in Anlage gebrachte Maschine entlang der Tischkante im wesentlichen eine Gleichgewichstlage ein. Ein zusätzliches Aufbringen einer Haltekraft durch den Benutzer kann somit wesentlich vermieden werden.

Ferner ist durch ein solches oder ähnlich abgewinkelt ausgebildetes Gehäusevorderteil mit einem zur Gerätelängsachse seitlich verschwenkt angeordnetem Antriebsmechanismus bei im wesentlichen allen senkrecht zu einer Auflagefläche verlaufenden Bearbeitungsflächen die Gefahr eines ungewollten Verkippens der handgeführten Maschine und der damit einhergehenden Qualitätseinbuße der bearbeiteten Oberfläche wesentlich verringert.

### Bezugszeichen

- 1: Gehäuse
- 2a, 2b: Schalenhälften
- 4, 5: Hohlraum
- 6: Handgriff
- 7,8,9: Trennwände
- 10: Stütz- und Führungseinrichtung
- 11: Gleitkufenplatte
- 12: Aussparung
- 13: Buchse
- 14: Rohr
- 15: Gewinde
- 16: Drehknopf
- 17: Kragen
- 18: Rohrinneres
- 19: Halterungsfortsatz
- 20: Elektromotor
- 20a: Motorachse
- 21: Kabel
- 22: Schalter
- 23: Sicherheitseinrichtungen
- 25: Akkumulator
- 26: Stecker und Steckdosenanordnungen
- 30: Antriebsmechanismus
- 31, 32, 33, 34, 35, **35'**, 36: Lager
- 40: Zahnradgetriebe
- 41: Motorwelle
- 42: Abtriebswelle
- 43, 44: Zwischenwelle
- 45: Kupplungsausbildungen
- 46, 47, 50: Zahnräder
- 48, 49: Kegelzahnräder
- 50: Zwischenzahnrad
- 51, 52: Kegelzahnrad
- 60: Oszillationsmechanismus
- 61: Scheibe
- 62: Kurbelzapfen
- 63: Folgeelement
- 64: Nut
- 65: Federringe
- 66: exzentrische Nut
- 67: Zapfen
- 70: Werkzeughalter
- 71: Abflachung
- 72: Schraubbohrung
- 73: Endfläche
- 75: Schraubenkopfs
- 76: Schraubenschaft
- 77: Ringfläche
- 80: Oszillationseinrichtung
- 81: Nockenfolger
- 82: Schrägscheibe oder Taumelscheibe
- 83: Welle
- 84, 85: Zahnrad
- 86: Gleitschalter
- 87: Gabeleinrichtung
- 88, 89: Laufbahn
- 90: Einstellvorrichtung
- 91: Scheibe
- 92: Drehknopf
- 93: Zähne
- 94: Wellenfortsatz
- 95: schaltbares Zahnrad, Kragen
- 96: Schlitz
- 97: Hebel
- 98: Daumen oder Vorsprung
- 99: Aussparung
- 100: Werkzeug
- 100a: Werkzeugachse
- 101: zylindrische Oberfläche
- 102: radiale Löcher
- 103: Nabe
- 104: nicht kreisförmiges Loch
- 105: Kragen
- 110: Werkstück
- 111: Ausschnitt
- 112: Kantenfläche
- 120: Zahnwelle
- 121: Verzahnung
- 122: Zwischenwelle
- 123: Zwischenzahnrad
- 124 125: Abtriebszahnrad
- 126: Feder
- 130: Oszillationseinstelleinrichtung
- 131: Schlitten
- 132: Nut
- 133: Sichtfenster
- 134: Öffnung
- 135: Manipulator
- 136: Gabelende
- 137: Sprengring
- 150: Zufuhrleitung
- 151: Auslaßende
- 152: Ventil
- 153: Zufuhrschlauch
- 154: Kranz
- 155: Faltenbalg
- 156: Nabe
- 157: Durchgangsöffnungen

## Patentansprüche

1. Mit der Hand zu führendes, maschinelles Schleif-, Raspel- oder Poliergerät mit folgenden Merkmalen:
ein Gehäuse (1);
ein Motor (20), der eine Motorwelle (41) aufweist;
ein Antriebsmechanismus (30), der mit der Motorwelle (41) verbunden ist und eine Einrichtung zum Drehen einer Abtriebswelle (42) sowie eine Einrichtung (80) zum Oszillieren der Abtriebswelle (42) umfaßt;
die Oszillationseinrichtung (80) umfaßt eine Schrägscheibe oder Taumelscheibe (82) und ein Folgeelement (81);
ein Werkzeughalter (70) unmittelbar an der Abtriebswelle (42) zum Halten eines Werkzeugs (100);
eine Stütz- und Führungseinrichtung (10) zum Abstützen und gegebenenfalls Entlangführen des Geräts auf einem Werkstück,
**gekennzeichnet durch** folgende Ausbildung:
eine mit Verzahnung versehene, von der Motorwelle (41) unmittelbar antreibbare Welle (120) erstreckt sich parallel und im Abstand zu der das Werkzeug antreibenden, axial verschiebbaren Abtriebswelle (42), wobei das Drehmoment der unmittelbar antreibbaren Welle (120) auf die Abtriebswelle (42) übertragen wird;
die Schrägscheibe oder Taumelscheibe (82) ist an einer Zwischenwelle (122) angebracht, die von der unmittelbar antreibbaren Welle (120) über eine Zahnradpaarung (121, 123) antreibbar ist.

2. Gerät nach Anspruch 1, **dadurch gekennzeichnet,**
**daß** die unmittelbar antreibbare Welle (120) als eine sich parallel zur Abtriebswelle (42) erstreckende Zahnwelle ausgebildet ist;
**daß** das Folgeelement (81) an einem mit der Abtriebswelle (42) verbundenen, von der unmittelbar antreibbaren Welle (120) antreibbaren Abtriebszahnrad (125) gehalten wird und an der Schrägscheibe (82) über ein federndes Andruckmittel (126) in Anlage gehalten wird;
**daß** die Zahnradpaarung (121, 123) von der unmittelbar antreibbaren Welle (120) zur Zwischenwelle (122) eine erste Untersetzung ergibt;
**daß** die Verzahnung (121) der unmittelbar antreibbaren Welle (120) mit dem Abtriebszahnrad (125) eine zweite Untersetzung ergibt; und
**daß** die erste Untersetzung von der zweiten Untersetzung um ein geringes Maß abweicht, so daß es zu einer Relativdrehung zwischen der Zwischenwelle (122) und der Abtriebswelle (42) kommt, wodurch das Folgeelement (81) axial in Richtung der Abtriebswelle (42) oszillierend hin- und herbewegt wird und die Abtriebswelle (42) während ihrer Rotation entsprechend oszillierend angetrieben wird.

3. Gerät nach Anspruch 1 oder 2, **dadurch gekennzeichnet, daß** eine Einstellvorrichtung (86; 135) für das Folgeelement (81) vorgesehen ist, um dieses in und außer Wirkung mit der Schrägscheibe (82) zu bringen.

4. Gerät nach Anspruch 2 oder 3, **dadurch gekennzeichnet, daß** das Folgeelement (81) unmittelbar am Abtriebszahnrad (125) befestigt ist und daß die Einstellvorrichtung (86) an dem Abtriebszahnrad (125) angreift, um dieses in eine erste Stellung außer Eingriff des Folgeelements (81) mit der Schrägscheibe (82) oder in eine zweite Stelle mit Eingriff des Polgeelementes (81) an der Schrägscheibe (82) zu bringen.

5. Gerät nach Anspruch 2 oder 3, **dadurch gekennzeichnet, daß** die Schrägscheibe (82) eine äußere (88) und eine innere (89) Laufbahn aufweist und
daß das Folgeelement (81) auf einem Schlitten (131) befestigt ist, der quer zum Antriebszahnrad (125) geführt ist, um in eine Stellung mit Eingriff des Folgeelements (81) in die radiale äußere Laufbahn (88) mit Oszillationsübertragung oder in eine mittlere Stellung mit Eingriff in die innere Laufbahn (89) eingestellt zu werden, bei der keine Oszillationsbewegung stattfindet.

6. Gerät nach einem der Ansprüche 1 bis 5, **dadurch gekennzeichnet,**
**daß** die Achse der Zwischenwelle (122) und die Achse der Abtriebswelle (42) parallel, mit einem geringen Versatz zueinander, verlaufen.

7. Gerät nach Anspruch 9, **dadurch gekennzeichnet,**
**daß** der Abstand der Achse der Zwischenwelle (122) zur unmittelbar antreibbaren Welle (120) größer ist als der Abstand der Abtriebswelle (42) von der unmittelbar antreibbaren Welle (120).

8. Gerät nach einem der Ansprüche 1 bis 4, **dadurch gekennzeichnet, daß** die Achse der Zwischenwelle (122) und die Achse der Abtriebswelle (42) koaxial zueinander verlaufen.

9. Gerät nach Anspruch 8, **dadurch gekennzeichnet,**
**daß** die Zwischenwelle (122) als Hohlwelle ausgebildet ist, durch welche die Abtriebswelle (42) führt.

10. Gerät nach einem der Ansprüche 1 bis 7,
**dadurch gekennzeichnet, daß** die Motorwelle (41) eine Verlängerung aufweist, die als die unmittelbar antreibbare Welle (120) ausgebildet ist.

11. Gerät nach einem der Ansprüche 1 bis 9, **dadurch gekennzeichnet,**
**daß** die unmittelbar antreibbare Welle (120) über ein Kegelzahnradpaar (51, 52) antreibbar ist, wobei die Achse der Motorwelle (41) und die Achse der unmittelbar antreibbaren Welle (120) senkrecht zueinander angeordnet sind.

12. Mit der Hand zu führendes, maschinelles Schleif-, Raspel- oder Poliergerät mit folgenden Merkmalen:
ein Gehäuse (1);
ein Motor (20), der eine Motorwelle (41) aufweist;
ein Antriebsmechanismus (30), der mit Motorwelle (41) verbunden ist und eine Einrichtung zum Drehen einer Abtriebswelle (42) sowie eine Einrichtung (80) zum Oszillieren der Abtriebswelle (42) umfaßt;
die Oszillationseinrichtung (80) umfaßt eine Schrägscheibe oder Taumelscheibe (82) und ein Folgeelement (81);
ein Werkzeughalter (70) unmittelbar an der Abtriebswelle (42) zum Halten eines Werkzeugs (100);
eine Stütz- und Führungseinrichtung (10) zum Abstützen und gegebenenfalls Entlangführen des Geräts auf einem Werkstück,
**gekennzeichnet durch** folgende Ausbildung:
die Motorwelle (41) und die Abtriebswelle (42)
fluchten zueinander und weisen ineinandergreifende Momentübertragungsmittel (45) auf, die eine axiale Verschiebung der Abtriebswelle (42) gegenüber der Motorwelle (41) zulassen;
das Folgeelement (81) ist als Nutring an der Abtriebswelle (42) angebracht;
die Schrägscheibe oder Taumelscheibe (82) ist an einer Zwischenwelle (83) angebracht, die von der Motorwelle (41) antreibbar ist;
der Rand der Schrägscheibe oder Taumelscheibe (82) greift in den Nutring ein und treibt diesen sowie die Abtriebswelle (42) oszillierend hin und her.

13. Gerät nach Anspruch 12, **dadurch gekennzeichnet,**
**daß** der Antrieb der Zwischenwelle (83) ein Zahnradpaar (84, 85) umfaßt, von denen das eine Zahnrad als Schiebezahnrad (84) ausgebildet ist, an welchem eine Einstellvorrichtung (86) angreift, um es in und außer Eingriff mit dem anderen Zahnrad (85) zu bringen, wobei in der Eingriffsstellung eine Oszillationsbewegung über die Schrägscheibe oder Taumelscheibe (82) und das Folgeelement (81) erzeugt wird, während in der Außer-Eingriff-Stellung die Zwischenwelle unangetrieben ist und damit auch die Schrägscheibe oder Taumelscheibe (82) außer Wirkung bleibt.

14. Gerät nach Anspruch 13, **dadurch gekennzeichnet,**
**daß** eine Verstelleinrichtung (90) zur Einstellung der relativen Stellung des Werkzeugs (100) zur Stütz- und Führungseinrichtung (10) vorgesehen ist, die beim ausgeschalteten Oszillationsantrieb die Zwischenwelle (83) und damit auch die Schrägscheibe oder Taumelscheibe (82) zu drehen und damit das Folgeelement (81) in axialer Richtung der Abtriebswelle (42) zu verstellen ermöglicht.

15. Gerät nach einem der vorstehenden Ansprüche, **gekennzeichnet durch** eine Einrichtung (150, 151) zum Zuführen von flüssigem Medium an das Werkzeug (100).

16. Gerät nach einem der vorstehenden Ansprüche, **dadurch gekennzeichnet, daß** die Achse der Abtriebswelle (42) in Bezug auf die Gerätelängsachse seitlich zu dieser verschwenkt angeordnet ist.

## Claims

1. A hand-held power tool for sanding, grinding, rasping, or polishing, comprising:
a housing (1);
a motor (20) having a motor shaft (41);
a driving mechanism (30) connected to said motor shaft (41) and including means for rotating an output shaft (42) as well as means (80) for oscillating said output shaft (42);
said oscillating means (80) including a wobbling disk or swash plate (42) and a follower element (81);
a tool holder (70) directly attached to said output shaft (42) for holding a tool (100);
supporting and guiding means (10) for supporting and, as the case is, guiding the power tool along a workpiece;
**characterised by**
a toothed shaft (120) directly driven by the motor shaft (41) and extending parallel to, and spaced from, said output shaft (42) which is axially movable and driving the tool, the torque of the directly driven shaft (120) being transferred onto said output shaft (42); and
said wobbling disk or swash plate (82) being fixed to an intermediate shaft (122) which is driven by the directly driven shaft (120) via meshing gears (121, 123).

2. The power tool of claim 1, wherein
the directly driven shaft (120) is a toothed shaft extending parallel to the output shaft (42);
the follower element (81) is held on a driven gear (125) connected to the output shaft (42) and being driven by the directly driven shaft (120), and engaging said swash plate (42) due to spring means (126);
said meshing gears (121, 123) producing in a first stepping down transmission from the directly driven shaft (120) to the intermediate shaft (122);
the gear (121) of the directly driven shaft (120) together with the driven gear (125) producing a second stepping down transmission; and
said first stepping down transmission differing from said second stepping down transmission by a small value so that a relative rotational movement between the intermediate shaft (122) and the output shaft (42) will be produced driving the follower element (81) axially in direction of the output shaft (42) in oscillating manner to and fro during the rotation thereof.

3. The power tool of claim 1 or 2,
wherein an adjusting means (86; 135) is provided for the follower element (81) so as to move same in and out of engagement with the swash plate (82).

4. The power tool according to claim 2 or 3,
wherein the follower element (81) is directly fixed to the driven gear (125), and the adjusting means (86) engages the driven gear (125) so as to bring same in a first position where the follower element (81) is out of engagement with the swash plate (82) or a second position
wherein the follower element (81) is in engagement with the swash plate (82).

5. The power tool of claim 2 or 3,
wherein the swash plate (82) has an outer (88) and an inner (89) race and wherein the follower element (81) is fixed to a carriage (131) guided transversely to the driving gear (125) so as to take a position with transfer of oscillation, wherein the follower element (81) engages the radially outer race (88), or an intermediate position without oscillating movement wherein the follower element engages the inner race (89).

6. The power tool according to one of the claims 1 through 5, wherein the axis of the intermediate shaft (122) and the axis of the output shaft (42) extend parallel and with a small offset from one another.

7. The power tool of claim 6, wherein the distance of the axis of the intermediate shaft (122) to the directly driven shaft (120) is wider than the distance of the output shaft (42) from the directly driven shaft (120).

8. The power tool according to one of the claims 1 through 4, wherein the axis of the intermediate shaft (122) and the axis of the output shaft (42) extend coaxially.

9. The power tool of claim 8, wherein the intermediate shaft (120) is a hollow shaft which the output shaft (42) passes through.

10. The power tool according to one of the claims 1 through 7, wherein the motor shaft (41) includes an extension which is the directly driven shaft (120).

11. The power tool according to one of the claims 1 through 9, wherein the directly driven shaft (120) is driven via meshing bevel gears (51, 52), the axis of the motor shaft (41) and the axis of the directly driven shaft (120) being arranged perpendicularly to one another.

12. A hand-held power tool for sanding, grinding, rasping, or polishing comprising:
a housing (1);
a motor (20) having a motor shaft (41);
a driving mechanism (30) connected to said motor shaft (41) and including means for rotating an output shaft (42) and means (80) for oscillating said output shaft (42);
said oscillating means (80) including a swash plate or wobbling disk (82) and a follower element (81);
a tool holder (70) directly attached to said output shaft (42) for holding a tool (100);
supporting and guiding means (10) for supporting and, as the case is, guiding the power tool along a workpiece,
**characterised by**:
the motor shaft (41) and the output shaft (42) registering to one another and having torque transferring means (45) allowing axial movement of the output shaft (42) relatively to the motor shaft (41);
the follower element (81) being a grooved roller fixed to the output shaft (42);
the swash plate or wobbling disk (82) being fixed onto an intermediate shaft (83) driven by the motor shaft (41); the swash plate or wobbling disk (83) having a rim to engage the grooved roller so as to drive same and the output shaft (42) in oscillating manner to and fro.

13. The power tool of claim 12,
wherein a gear pair (84, 85) is for driving the intermediate shaft (82), one of said gear pairs being a shiftable gear (84) which an adjusting means (86) engages so as to bring the same in and out of engagement with the other gear (85) of the pair, whereby, in the engaging position, an oscillating movement is produced via the swash plate or wobbling disk (82) and the follower element (81), whereas in the out-of-engagement position the intermediate shaft is not driven, and therefore the swash plate or wobbling disk (82) remaining without effect.

14. The power tool of claim 13, wherein an adjusting means (90) is provided for adjusting the position of the tool (100) relatively to the supporting and guiding means (10), the adjusting means, when the oscillating means is shut-off, allows rotating the intermediate shaft (83) and therefore also the swash plate or wobbling disk (82) so as to adjust the follower element (81) in axial direction of the output shaft (42).

15. The power tool of one of the preceding claims, **characterised by** a means (150, 151) for admitting fluid medium onto the tool (100).

16. The power tool of one of the preceding claims,
wherein the axis of the output shaft (42) is offset laterally to the longitudinal axis of the power tool.

## Revendications

1. outil mécanisé à main pour meuler, râper ou polir qui présente les caractéristiques suivantes :
un boîtier (1) ;
un moteur (20) qui possède un arbre du moteur (41) ;
un mécanisme d'entraînement (30) relié à l'arbre du moteur (41) et comprenant un dispositif pour faire tourner un arbre mené (42) ainsi qu'un dispositif (80) pour faire osciller l'arbre mené (42) ;
le dispositif d'oscillation (80) comprend un disque oblique ou disque oscillant (82) et un élément suiveur (81) ;
un porte-outil (70) fixé directement sur l'arbre mené (42) pour tenir un outil (100) ;
un dispositif d'appui et de guidage (10) pour appuyer et éventuellement guider l'appareil le long d'une pièce à usiner,
**caractérisé par** la configuration suivante :
un arbre à cannelures (120) directement entraînable par l'arbre du moteur (41) est disposé parallèlement à une certaine distance de l'arbre mené (42) qui est mobile axialement et entraîne l'outil, de sorte que le couple de l'arbre directement entraînable (120) est transmis à l'arbre mené (42) ;
le disque oblique ou disque oscillant (82) est fixé sur un arbre intermédiaire (122) qui peut être entraîné par l'arbre directement entraînable (120) par l'intermédiaire d'un engrenage (121, 123).

2. Appareil selon la revendication 1 **caractérisé par le fait que** l'arbre directement entraînable (120) est réalisé sous forme d'un arbre cannelé parallèle à l'arbre mené (42) ;
que l'élément suiveur (81) est maintenu sur une roue dentée menée (125) reliée à l'arbre mené (42) ladite roue étant entraînable par l'arbre directement entraînable (120) et que l'élément suiveur (81) est maintenu en contact avec le disque oblique (82) à l'aide d'un moyen de pression à ressort (126) ;
que l'engrenage (121, 123) réalise une première réduction de l'arbre directement entraînable (120) vers l'arbre intermédiaire (122) ;
que les cannelures (121) de l'arbre directement entraînable (120) réalisent une seconde réduction vers la roue dentée menée (125) ; et
que la première réduction diffère légèrement de la seconde réduction de sorte à établir une rotation relative de l'arbre intermédiaire (122) par rapport à l'arbre mené (42) de sorte que l'élément suiveur (81) se déplace axialement de manière oscillante selon la direction de l'arbre mené (42) et que l'arbre mené (42) est entraîné à osciller en correspondance pendant sa rotation.

3. Appareil selon les revendications 1 ou 2 **caractérisé par le fait**
**qu'**un dispositif de réglage (86 ; 135) est prévu pour mettre l'élément suiveur (81) en prise ou non avec le disque oblique (82).

4. Appareil selon les revendications 2 ou 3 **caractérisé par le fait que** l'élément suiveur (81) est directement fixé sur la roue dentée menée (125) et que le dispositif de réglage (86) agit sur la roue dentée menée (125) pour la mettre dans une première position où l'élément suiveur (81) n'est pas en prise avec le disque oblique (82) ou dans une deuxième position où l'élément suiveur (81) est en prise avec le disque oblique (82).

5. Appareil selon les revendications 2 ou 3 **caractérisé par le fait que** le disque oblique (82) présente une piste extérieure (88) et une piste intérieure (89) et
que l'élément suiveur (81) est fixé sur un coulisseau (131) guidé transversalement sur la roue dentée menée (125), ledit coulisseau (131) permettant de placer l'élément suiveur (81) dans une position en prise avec la piste extérieure (88) avec transmission d'un mouvement oscillatoire ou dans une position en prise avec la piste intérieure (89) sans génération d'un mouvement oscillatoire.

6. Appareil selon l'une des revendications 1 à 5 **caractérisé par le fait**
**que** l'axe de l'arbre intermédiaire (122) et l'axe de l'arbre mené (42) sont parallèles et légèrement décalés.

7. Appareil selon la revendication 6 **caractérisé par le fait que** la distance entre l'axe de l'arbre intermédiaire (122) et l'arbre directement entraînable (120) est supérieur à la distance entre l'arbre mené (42) et l'arbre directement entraînable (120).

8. Appareil selon l'une des revendications 1 à 4 **caractérisé par le fait que** l'axe de l'arbre intermédiaire (122) et l'axe de l'arbre mené (42) sont coaxiaux.

9. Appareil selon la revendication 8 **caractérisé par le fait que** l'arbre intermédiaire (122) est un arbre creux contenant l'arbre mené (42).

10. Appareil selon l'une des revendications 1 à 7 **caractérisé par le fait que** l'arbre du moteur (41) présente une prolongation qui constitue l'arbre directement entraînable (120).

11. Appareil selon l'une des revendications 1 à 9 **caractérisé par le fait que** l'arbre directement entraînable (120) est entraînable par un engrenage conique (51, 52) de sorte que l'axe de l'arbre du moteur (41) et l'axe de l'arbre directement entraînable (120) sont perpendiculaires entre eux.

12. Outil mécanisé à main pour meuler, râper ou polir qui présente les caractéristiques suivantes :
un boîtier (1) ;
un moteur (20) qui possède un arbre du moteur (41) ;
un mécanisme d'entraînement (30) relié à l'arbre du moteur (41) et comprenant un dispositif pour faire tourner un arbre mené (42) ainsi qu'un dispositif (80) pour faire osciller l'arbre mené (42) ;
le dispositif d'oscillation (80) comprend un disque oblique ou disque oscillant (82) et un élément suiveur (81) :
un porte-outil (70) fixé directement sur l'arbre mené (42) pour tenir un outil (100) ;
un dispositif d'appui et de guidage (10) pour appuyer et éventuellement guider l'appareil le long d'une pièce à usiner,
**caractérisé par** la configuration suivante :
l'arbre du moteur (41) et l'arbre mené (42) sont alignés l'un sur l'autre et présentent des moyens de transmission du couple qui s'engrènent l'un dans l'autre et autorisent un déplacement axial de l'arbre mené (42) par rapport à l'arbre du moteur (41) ;
l'élément suiveur (81) est constitué d'une roue à gorge fixée sur l'arbre mené (42) ;
le disque oblique ou disque oscillant (82) est fixé sur un arbre intermédiaire (83) entraînable par l'arbre du moteur (41) ;
le bord du disque oblique ou disque oscillant (82) s'engage dans la roue à gorge et lui confère un mouvement oscillant ainsi qu'à l'arbre mené (42).

13. Appareil selon la revendication 12 **caractérisé par le fait que** l'entraînement de l'arbre intermédiaire (83) comprend un engrenage (84, 85) dont une roue dentée est réalisée sous forme de roue baladeuse (84) commandée par un dispositif de réglage (86) qui la met en prise ou non avec l'autre roue dentée (85), de sorte que, quand les roues sont en prise, un mouvement oscillatoire est généré par l'intermédiaire du disque oblique ou disque oscillant (82) et de l'élément suiveur (81) alors que, quand les roues ne sont pas en prise, l'arbre intermédiaire n'est pas entraîné et le disque oblique ou disque oscillant (82) reste donc sans effet.

14. Appareil selon la revendication 13 **caractérisé par le fait qu'**un réglage de la position relative de l'outil (100) par rapport au dispositif d'appui et de guidage (10) peut être effectué à l'aide d'un dispositif de réglage (90) qui permet de faire tourner l'arbre intermédiaire (83) et ainsi également le disque oblique ou disque oscillant (82) et donc de déplacer l'élément suiveur (81) selon la direction l'axe de l'arbre mené (42) quand l'entraînement oscillatoire est désaccouplé.

15. Appareil selon l'une des revendications précédentes **caractérisé par** un dispositif (150, 151) pour conduire un fluide vers l'outil (100).

16. Appareil selon l'une des revendications précédentes **caractérisé par le fait que** l'axe de l'arbre mené (42) n'est pas dans le même plan que l'axe longitudinal de l'appareil.
